# EUROPEAN PATENT APPLICATION

(11) **EP 4 361 400 A1**
(43) Date of publication of application: **01.05.2024**
(21) Application number: 23205044.3
(22) Date of filing: 20.10.2023
(51) Int. Cl.: F01D 5/28, C04B 41/52, C04B 41/87, C04B 41/89, F01D 11/08, F01D 25/00

(54) **SEAL WITH COATING AND METHOD OF FABRICATING**

(30) Priority: 31.10.2022 US 202263420868 P
(71) Applicant: RTX Corporation, Farmington, CT 06032 (US)
(72) Inventor: WHITE, III, Robert A., Farmington, 06032 (US)
(74) Representative: Dehns

(57) **Abstract**

A sealing assembly includes a first component (102), a second component (104), and a seal (100) sealing between the first component (102) and the second component (104). The seal (100) includes a coating (200). A thickness (Tₛₑₐₗ) of the seal (100) is less than about twice the thickness (T) of the coating (200). A method of fabricating a ceramic matrix composite seal (100) is also disclosed.

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Various areas of the gas turbine engine include seals. The seals can me metallic or in some examples ceramic matrix composite materials. There is a need for improving the sealing efficiency and physical properties of these seals.

### SUMMARY OF THE INVENTION

From one aspect, there is provided a sealing assembly that, among other possible things, includes a first component, a second component, and a seal sealing between the first component and the second component. The seal includes a coating. A thickness of the seal is less than about twice the thickness of the coating.

In an example of the foregoing, wherein the coating includes at least one of rare earth silicates, alkaline earth silicates, alkaline earth aluminosilicates, yttria-stabilized zirconia, alumina-stabilized zirconia, hafnon, zircon, yttria, mullite, titania, chromia, silicon, silicon oxides, silicon carbides, silicon oxycarbides, barium-magnesium aluminosilicate, hafnium oxides, hafnium silicon oxides, alumina-stabilized zirconia, zirconium oxides, yttrium oxides, and combinations thereof.

In a further example of any of the foregoing, the coating includes at least one of hafnon, zircon, and mullite.

In a further example of any of the foregoing, the seal has first and second opposed sides. The coating is on at least one of the first and second opposed sides.

In a further example of any of the foregoing, the coating is on both of the first and second opposed sides.

In a further example of any of the foregoing, the coating is on edges of the seal.

In a further example of any of the foregoing, a thickness of the coating is between about 0.005 inches (0.127 mm) and about 0.070 inches (1.78 mm).

In a further example of any of the foregoing, the thickness of the coating is less than about 0.050 inches (1.27 mm).

In a further example of any of the foregoing, the seal has a thickness that is between about 0.005 mils (0.127 µm) and about 0.040 mils (1.02 µm).

In a further example of any of the foregoing, the seal is a ceramic matrix composite.

In a further example of any of the foregoing, a surface of the coating is smoother than a surface of the ceramic matrix composite seal.

There is also provided a method of fabricating a ceramic matrix composite seal that, among other possible things, includes infiltrating ceramic reinforcements with a ceramic matrix to form a ceramic matrix composite; and applying a coating to the ceramic matrix composite such that the coating is smoother than a surface of the ceramic matrix composite seal. A thickness of the seal is less than about twice the thickness of the coating.

In a further example of the foregoing, the method also includes machining a surface of the ceramic matrix composite prior to applying the coating.

In a further example of any of the foregoing, the method also includes machining a surface of the coating after the applying step, the machining resulting in smoothing a surface of the coating.

In a further example of any of the foregoing, the machining is accomplished by grinding, ultrasonic machining, water guided laser, milling.

In a further example of any of the foregoing, the ceramic matrix composite is machined to reduce a thickness of the ceramic matrix composite after the applying step.

In a further example of any of the foregoing, the coating is machined after the applying step to reduce a thickness of the coating.

In a further example of any of the foregoing, a thickness of the coating is between about 0.005 inches (0.127 mm) and 0.070 inches (1.78 mm) after the machining.

In a further example of any of the foregoing, the coating includes at least one of rare earth silicates, alkaline earth silicates, alkaline earth aluminosilicates, yttria-stabilized zirconia, alumina-stabilized zirconia, hafnon, zircon, yttria, mullite, titania, chromia, silicon, silicon oxides, silicon carbides, silicon oxycarbides, barium-magnesium aluminosilicate, hafnium oxides, hafnium silicon oxides, alumina-stabilized zirconia, zirconium oxides, yttrium oxides, and combinations thereof.

In a further example of any of the foregoing, the coating includes at least one of hafnon, zircon, and mullite.

### BRIEF DESCRIPTION OF THE DRAWINGS

Figure 1 schematically illustrates an example gas turbine engine.
Figure 2 schematically illustrates a sealing assembly with a seal having a machinable coating.

### DETAILED DESCRIPTION

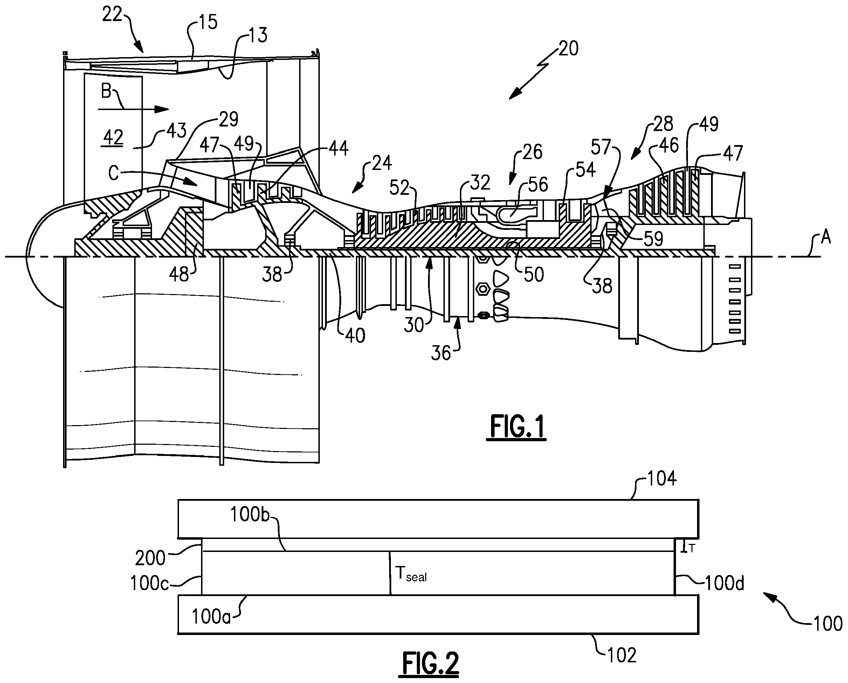

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

Various areas of the engine 20 include seals. For instance, the turbine section 28 may include seals between adjacent platforms of the vanes of the rows of vanes. As another example, the turbine section 28 may include seals between tips of the blades in the rows of blades and engine 20 casing structures, known as blade outer air seals or BOAS. Other examples are also contemplated.

Figure 2 schematically illustrates a seal 100 for the engine 20. The seal 100 is generally a thin, flat or approximately flat, and flexible construct situated between two sealing surfaces schematically shown as elements 102 and 104. However, thicker and highly contoured variants may also be utilized. The components 102/104 can be, for example, part of a vane assembly for vanes in the engine 20. In another example, the seal 100 can be situated in a slot of a component 102/104 and seal against an adjacent component 102/104. In one example, the seal 100 can be metallic, but in other examples is a ceramic matrix composite fabric. Ceramic matrix composites ("CMCs") are known in the art and will not be described in detail herein, but generally include ceramic-based reinforcements such as fibers (which may be continuous) disposed in a ceramic-based matrix material. In the case of ceramic matrix composite seals, the reinforcements can be two-dimensional/three-dimensional textiles made from unidirectional, woven, braided, knitted, or nonwoven fibers.

Ceramic matrix composites are desirable for use as seals and other components in engine 20 because they have high temperature capabilities. However, untreated ceramic matrix composites can have poorer surface qualities than their metallic counterparts because of undulations corresponding to the reinforcements at the surface (commonly known as crimp), residual open porosity remaining after infiltrating the matrix material into the reinforcements, and inherent surface roughnesses of the matrix and/or fiber reinforcements. These small and/or large scale surface anomalies can reduce sealing effectiveness of the seal. In general, a smoother surface can better mate with the surrounding sealing surfaces to provide a better seal.

Accordingly, the seal 100 is coated with a machinable coating 200. The seal 100 has first and second opposed sides 100a/100b, and one or both of the sides 100a/100b can include the machinable coating 200. Further, the perimeter sides (edges 100c/100d) of the seal may also include the machinable coating 200. The coating 200 referred to herein will refer to coating on a single side 100a/100b of the seal 100, but it should be understood that coating can also be present on the opposite side 100a/100b or edges of the seal 100c/100d.

The coating 200 in one example comprises a silicate that has a coefficient of thermal expansion that is compatible with the coefficient of thermal expansion of the seal 100. The coating 200 may include includes rare earth silicates, alkaline earth silicates, alkaline earth aluminosilicates, yttria-stabilized zirconia, alumina-stabilized zirconia, mullite, titania, chromia, silicon, silicon oxides, silicon carbides, silicon oxycarbides, barium-magnesium aluminosilicate, hafnium oxides such as hafnon, hafnium silicon oxides, alumina-stabilized zirconia, zirconium oxides such as zircon, yttrium oxides such as yttria, mullite, and combinations thereof. In a particular example, the machinable coating includes at least one of hafnon, zircon, and mullite.

In a particular example, a silicon bond coat is disposed between the seal 100 and the coating 200.

In general, the machinable coating has a high density (for example, less than about 5% porosity).

In some examples, the coating 200 provides some thermal resistance to help shield the material of the seal 100 from high temperatures generated in the engine 20. In addition, the thermal resistance provided by the coating 200 may also protect adjacent lower temperature-capable components. For instance, in an example where the seal 100 seals between a ceramic component 102 and a metallic component 104, the coating may provide some thermal resistance to the metallic component 104, which may have lower temperature capabilities than the ceramic component 102 and the seal 100 itself.

In the example where the seal 100 seals between a ceramic component 102 and a metallic component 104, the coating 200 may also provide thermochemical insulation between the ceramic component 102 and metallic component 104 by helping to discourage unwanted chemical reactions between the components 102/104.

Further, in some examples, the coating 200 enhances wear characteristics between the seal 100 and the mating component 102/104 to provide a better wear couple and limit degradation between the components 102/104 and the seal 100.

The coating 200 on the sides 100a/100b has a thickness T. In general, the thickness T is selected to be thick enough to address the surface roughness of the seal 100 as discussed above, but to be thin enough to meet the geometric and weight requirements for the seal 100, and not to impede the flexibility of the seal 100. In examples where the coating 200 is applied to both sides 100a/100b of the seal 100, the thickness T is the sum of the thickness of the coating 200 on each side 100a/100b. In one example, the thickness T is between about 0.007 inches (0.178 mm) and about 0.070 inches (1.78 mm). In a particular example, the thickness T is less than about 0.050 inches (1.27 mm) thick. In other examples, however, thicker coatings 200 may be employed.

In a particular example, the seal 100 including the coating 200 has a thickness Tₛₑₐₗ that is between about 0.005 mils (0.127 µm) and about 0.040 mils (1.02 µm). In general, the thickness T is less than about twice the thickness Tₛₑₐₗ.

The coating 200 may be applied to the seal 100 in any suitable way known in the art, such as spraying. The coating 200 is cured or dried according to its makeup and application method, which curing/drying are well-known in the art. In some examples, the coating 200 is machined via grinding, ultrasonic machining, water guided laser, milling, or another suitable method. In general, the as-applied (non-machined) coating 200 is smoother than a CMC seal 100. However, machining provides an even smoother surface for the sealing interface.

The coating 200 can be applied to a CMC seal 100 after the matrix is infiltrated into the reinforcements and any heat-treating steps are performed without any additional processing being performed to the CMC seal 100 after the infiltration. The making of CMCs, generally, and infiltration and heat treatment specifically, are well-known in the art and will not be described in detail herein. In another example, the CMC seal 100 is processed or machined after the infiltration, and the coating 200 is applied after the processing or machining. The processing or machining can be milling, grinding, or an ultrasonic machining process that minimizes surface anomalies in the surface of the CMC seal 100 after fabrication.

In one example, the CMC seal 100 is fabricated as a thicker construct than the desired seal 100 dimension. For instance, the CMC seal 100 is fabricated to have a thickness Tₛₑₐₗ greater than about 0.040 mils (1.02 µm). The coating 200 is applied to a side 100a/100b of the thicker construct, and then the thicker construct is machined down to the desired seal 100 dimension. This minimizes the chances of the seal 100 warping or bending during application of the coating 200, which can occur if the seal is too thin relative to the amount of coating 200 applied to it.

In an example where the coating 200 is machined after application, the thickness T is the thickness of the coating 200 after machining. In this example, a thickness of the as-applied coating (before machining) an be up to about 0.110 inches (2.79 mm), in some examples.

As used herein, the term "about" has the typical meaning in the art, however in a particular example "about" can mean deviations of up to 10% of the values described herein.

Although a combination of features is shown in the illustrated examples, not all of them need to be combined to realize the benefits of various embodiments of this disclosure. In other words, a system designed according to an embodiment of this disclosure will not necessarily include all of the features shown in any one of the figures or all of the portions schematically shown in the figures. Moreover, selected features of one example embodiment may be combined with selected features of other example embodiments.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A sealing assembly, comprising:
a first component (102);
a second component (104); and
a seal (100) sealing between the first component (102) and the second component (104), the seal (100) including a coating (200), wherein a thickness (Tₛₑₐₗ) of the seal (100) is less than about twice the thickness (T) of the coating (200).

2. The sealing assembly of claim 1, wherein the seal (100) has first and second opposed sides (100a, 100b), and wherein the coating (200) is on at least one of the first and second opposed sides (100a, 100b).

3. The sealing assembly of claim 2, wherein the coating (200) is on both of the first and second opposed sides (100a, 100b).

4. The sealing assembly of any preceding claim, wherein the coating (200) is on edges (100c, 100d) of the seal (100).

5. The sealing assembly of any preceding claim, wherein the thickness (T) of the coating (200) is between about 0.005 inches (0.127 mm) and about 0.070 inches (1.78 mm), optionally wherein the thickness (T) of the coating (200) is less than about 0.050 inches (1.27 mm).

6. The sealing assembly of any preceding claim, wherein the thickness (Tₛₑₐₗ) of the seal (100) is between about 0.005 (0.127 µm) and about 0.040 mils (1.02 µm).

7. The sealing assembly of any preceding claim, wherein the seal (200) is a ceramic matrix composite.

8. The sealing assembly of claim 7, wherein a surface of the coating (200) is smoother than a surface of the ceramic matrix composite seal (100).

9. A method of fabricating a ceramic matrix composite seal (100), comprising:
infiltrating ceramic reinforcements with a ceramic matrix to form a ceramic matrix composite;
applying a coating (200) to the ceramic matrix composite such that the coating (200) is smoother than a surface of the ceramic matrix composite seal (100), and wherein a thickness (Tₛₑₐₗ) of the seal (100) is less than about twice the thickness (T) of the coating (200).

10. The method of claim 9, further comprising machining a surface of the ceramic matrix composite prior to applying the coating (200).

11. The method of claim 9, further comprising machining a surface of the coating (200) after the applying step, the machining resulting in smoothing a surface of the coating (200), optionally wherein the machining is accomplished by grinding, ultrasonic machining, water guided laser, milling.

12. The method of claim 9 or 11, wherein the ceramic matrix composite is machined to reduce a thickness of the ceramic matrix composite after the applying step.

13. The method of claim 12, wherein the coating (200) is machined after the applying step to reduce a thickness (T) of the coating (200), optionally wherein a thickness (T) of the coating (200) is between about 0.005 inches (0.127 mm) and 0.070 inches (1.78 mm) after the machining.

14. The sealing assembly or method of any preceding claim, wherein the coating (200) includes at least one of rare earth silicates, alkaline earth silicates, alkaline earth aluminosilicates, yttria-stabilized zirconia, alumina-stabilized zirconia, hafnon, zircon, yttria, mullite, titania, chromia, silicon, silicon oxides, silicon carbides, silicon oxycarbides, barium-magnesium aluminosilicate, hafnium oxides, hafnium silicon oxides, alumina-stabilized zirconia, zirconium oxides, yttrium oxides, and combinations thereof.

15. The sealing assembly or method of any preceding claim, wherein the coating (200) includes at least one of hafnon, zircon, and mullite.
